# EUROPÄISCHE PATENTANMELDUNG

(11) **EP 2 168 711 A2**
(43) Veröffentlichungstag der Anmeldung: **31.03.2010**
(21) Anmeldenummer: 10000357.3
(22) Anmeldetag: 02.09.2004
(51) Int. Cl.: B23K 26/38, B23K 26/40

(54) **Verfahren zur Herstellung eines Lochs**

(30) Priorität: 06.10.2003 EP 03022635; 29.10.2003 EP 03024966
(62) Teilanmeldung aus: 04764751.6
(71) Anmelder: Siemens Aktiengesellschaft, 80333 München (DE)
(72) Erfinder: Beck, Thomas, 16341 Panketal (DE); Bostanjoglo, Georg, Dr., 12161 Berlin (DE)

(57) **Zusammenfassung**

Bisherige Verfahren zur Erzeugung eines Lochs in einem Bauteil sind sehr zeitaufwändig und kostenintensiv, da spezielle Laser mit ultrakurzen Laserpulslängen verwendet werden.

Das erfindungsgemäße Verfahren variiert die Laserpulslängen, wobei ultrakurze Laserpulslängen nur in dem zu entfernenden Bereich verwendet werden, in dem sich ein Einfluss auf das Durch- bzw. Ausströmungsverhalten bemerkbar macht. Dies ist z.B. die innere Oberfläche eines Diffusors (13) eines Lochs, das mit ultrakurzen Laserpulslängen sehr genau hergestellt werden kann.

## Beschreibung

Die Erfindung betrifft ein Verfahren zur Herstellung eines Lochs gemäß Anspruch 1, bei dem mittels zumindest eines Lasers und gepulster Laserstrahlen in einem Bauteil ein Loch erzeugt wird und eine Vorrichtung zur Durchführung des Verfahrens gemäß Anspruch 16.

Bei vielen Bauteilen, insbesondere bei Gussteilen, müssen nachträglich Abtragungen wie Vertiefungen oder Durchgangslöcher erzeugt werden. Insbesondere bei Turbinenbauteilen, die zur Kühlung Filmkühllöcher aufweisen, werden nach der Herstellung des Bauteils Löcher nachträglich eingefügt.

Solche Turbinenbauteile weisen oft auch Schichten auf, wie z.B. eine metallische Zwischenschicht und/oder eine keramische äußere Schicht. Die Filmkühllöcher müssen dann durch die Schichten und das Substrat (Gussteil) hindurch erzeugt werden.

Die US-PS 6,172,331 sowie die US-PS 6,054,673 offenbaren eine Laserbohrmethode, um in Schichtsystemen Löcher einzufügen, wobei ultrakurze Laserpulslängen verwendet werden. Es wird aus einem bestimmten Laserpulslängenbereich eine Laserpulslänge ausgesucht und damit das Loch erzeugt.

Die DE 100 63 309 A1 offenbart ein Verfahren zur Herstellung einer Kühlluftöffnung mittels eines Lasers, bei dem die Laserparameter so eingestellt werden, dass Material durch Sublimieren abgetragen wird.

Die Verwendung von solchen ultrakurzen Laserpulsen ist wegen deren geringen mittleren Leistungen teuer und sehr zeitintensiv.

Es ist daher Aufgabe der Erfindung dieses Problem zu überwinden.

Die Aufgabe wird gelöst durch ein Verfahren gemäß Anspruch 1, bei dem verschiedene Laserpulslängen verwendet werden.

Besonders vorteilhaft ist es, wenn nur in einem der ersten Verfahrensschritte kurze Laserpulslängen verwendet werden, um optimale Eigenschaften in einem äußeren Oberbereich der Trennfläche zu erzeugen, da diese entscheidend sind für das Ausströmverhalten eines Mediums aus dem Loch sowie für das Umströmverhalten eines Mediums um dieses Loch.
Im Inneren des Lochs sind die Eigenschaften der Trennfläche eher unkritisch, so dass dort längere Laserpulslängen verwendet werden können, die inhomogene Trennflächen verursachen können.

Eine weitere Aufgabe ist es, eine Vorrichtung aufzuzeigen mit der das Verfahren einfach und schnell durchgeführt werden kann.

Diese Aufgabe wird gelöst durch eine Vorrichtung gemäß Anspruch 16.

In den Unteransprüchen sind weitere vorteilhafte Maßnahmen des Verfahrens aufgelistet.
Die in den Unteransprüchen aufgelisteten Maßnahmen können in vorteilhafter Art und Weise miteinander kombiniert werden.

Die Erfindung wird anhand der Figuren näher erläutert.

Es zeigen
- Figur 1: ein Loch in einem Substrat,
- Figur 2: ein Loch in einem Schichtsystem,
- Figur 3,4,5,6,7,8,9: Verfahrensschritte des erfindungsgemäßen Verfahrens,
- Figur 10: eine Apparatur, um das Verfahren durchzuführen,
- Figur 11: eine Turbinenschaufel,
- Figur 12: eine Gasturbine und
- Figur 13: eine Brennkammer.

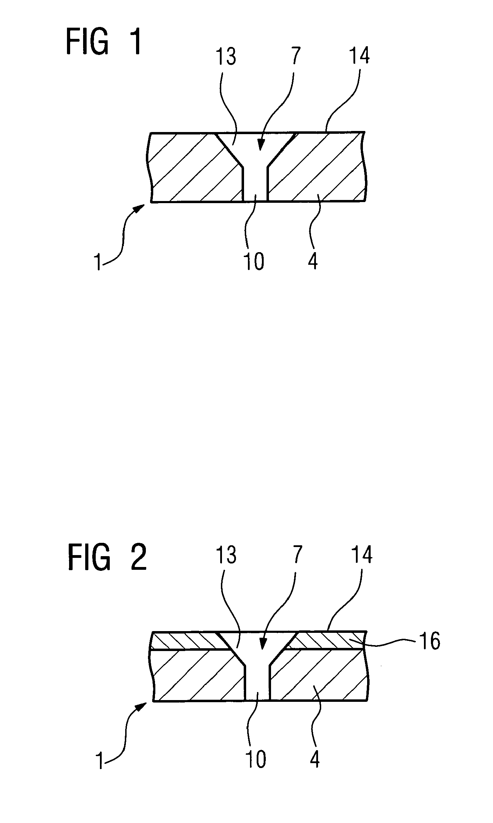

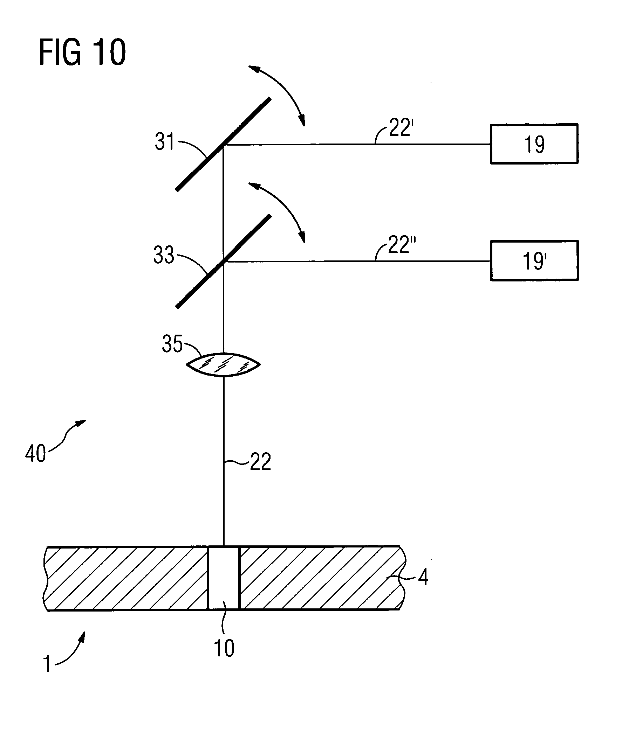

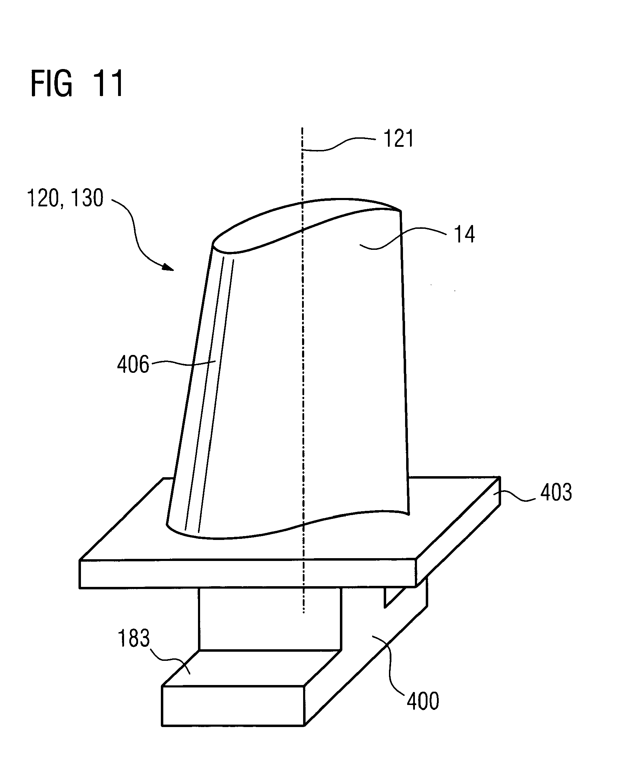

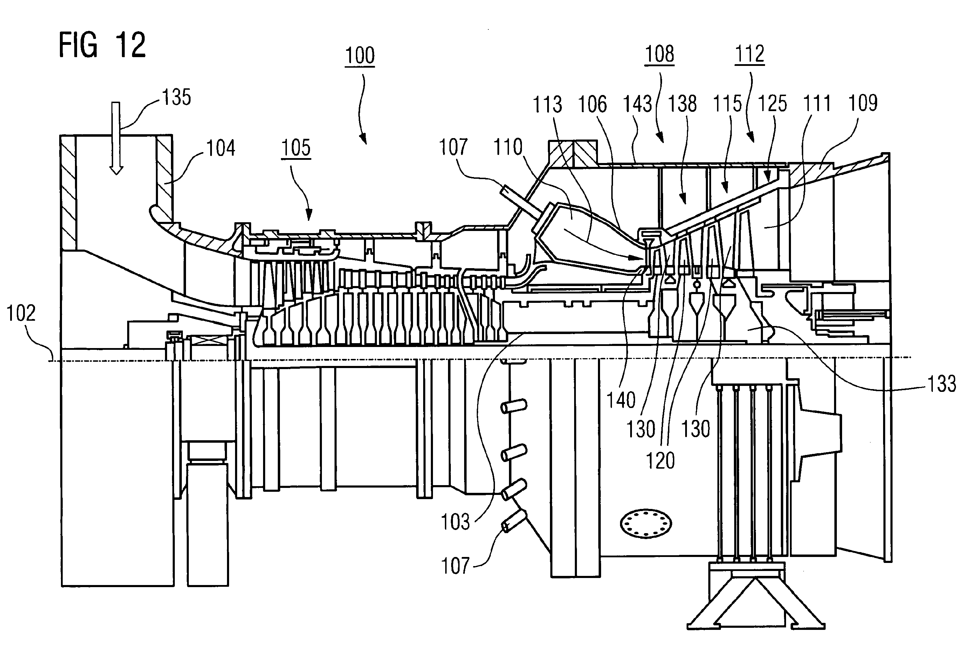

Figur 1 zeigt ein Bauteil 1 mit einem Loch 7.
Das Bauteil 1 besteht aus einem Substrat 4 (beispielsweise Gussteil).
Das Substrat 4 kann metallisch und/oder keramisch sein. Insbesondere bei Turbinenbauteilen, wie z.B. Turbinenlauf- 120 (Fig. 10, 11) oder -leitschaufeln 130 (Fig. 11), Brennkammerauskleidungen 155 (Fig. 12) sowie anderen Gehäuseteilen einer Dampf- oder Gasturbine 100 (Figur 11, aber auch Flugzeugturbine), besteht das Substrat 4 aus einer nickel-, kobalt- oder eisenbasierten Superlegierung.
Das Substrat 4 weist ein Loch 7 auf, das beispielsweise ein Durchgangsloch ist. Es kann auch ein Sackloch sein.
Das Loch 7 besteht aus einem unteren Bereich 10 in einem unteren Bereich des Lochs 7, der beispielsweise symmetrisch und beispielsweise auch kreisförmig ausgebildet ist, und einem Diffusor 13 an einer Oberfläche 14 des Substrats 4. Der Diffusor 13 stellt beispielsweise eine Verbreiterung im Querschnitt gegenüber dem Teil 10 des Lochs 7 dar.
Das Loch 7 ist z.B. ein Filmkühlloch. Insbesondere die innenliegende Oberfläche des Diffusors 13 soll eben sein, um ein optimales Ausströmen eines Mediums aus dem Loch 7 zu ermöglichen.

Figur 2 zeigt ein Bauteil 1, das als Schichtsystem ausgeführt ist.
Auf dem Substrat 4 ist zumindest eine Schicht 16 vorhanden. Dies kann beispielsweise eine metallische Legierung des Typs MCrAlX sein, wobei M für zumindest ein Element der Gruppe Eisen, Kobalt oder Nickel steht. X steht für Yttrium und/oder zumindest ein Element der Seltenen Erden.
Die Schicht 16 kann auch keramisch sein.

Auf dieser Schicht kann noch eine weitere Schicht (nicht dargestellt) vorhanden sein, beispielsweise eine keramische Schicht, insbesondere eine Wärmedämmschicht.

Die Wärmedämmschicht ist beispielsweise eine vollständig oder teilstabilisierte Zirkonoxidschicht, insbesondere eine EB-PVD-Schicht oder plasmagespritzte (APS, LPPS, VPS) Schicht.

In dieses Schichtsystem wird ebenfalls ein Loch 7 mit den zwei Teilbereichen 10 und 13 eingebracht.

Die Ausführungen zur Herstellung des Lochs 7 gelten für Substrate 4 mit und ohne Schicht oder Schichten.

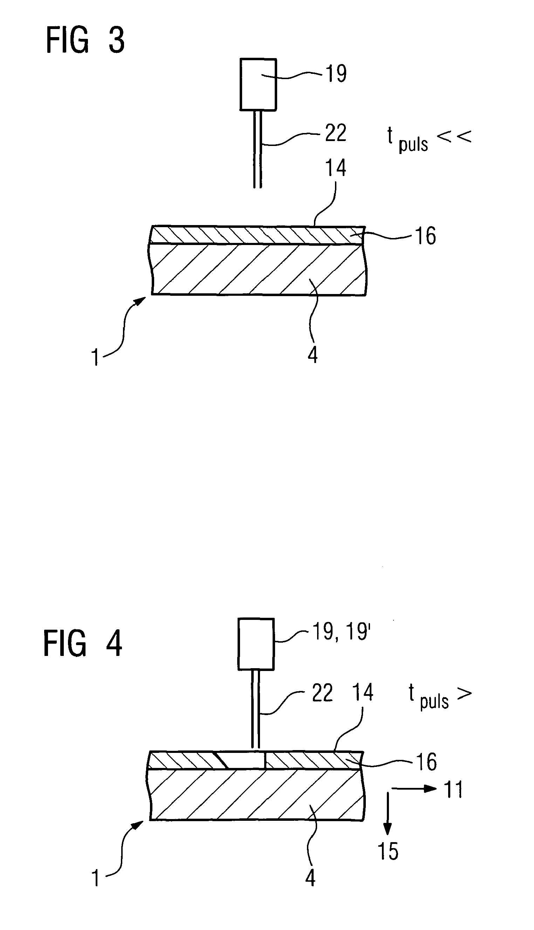

Figur 3 und 4 zeigen Verfahrensschritte des erfindungsgemäßen Verfahrens.

Erfindungsgemäß werden verschiedene Laserpulslängen während des Verfahrens verwendet, insbesondere bei einem der ersten Verfahrensschritte werden sehr kleine Laserpulslängen kleiner 100 ns (Nanosekunden), insbesondere kleiner 50 ns verwendet. Es können auch Laserpulslängen kleiner Pikosekunden oder Femtosekunden verwendet werden.
Bei der Verwendung von sehr kurzen Laserpulslängen kleiner 100 ns, insbesondere kleiner 50 ns werden nahezu keine Aufschmelzungen im Bereich der Trennfläche erzeugt. Somit bilden sich dort keine Risse aus und exakte Geometrien können so erzeugt werden.

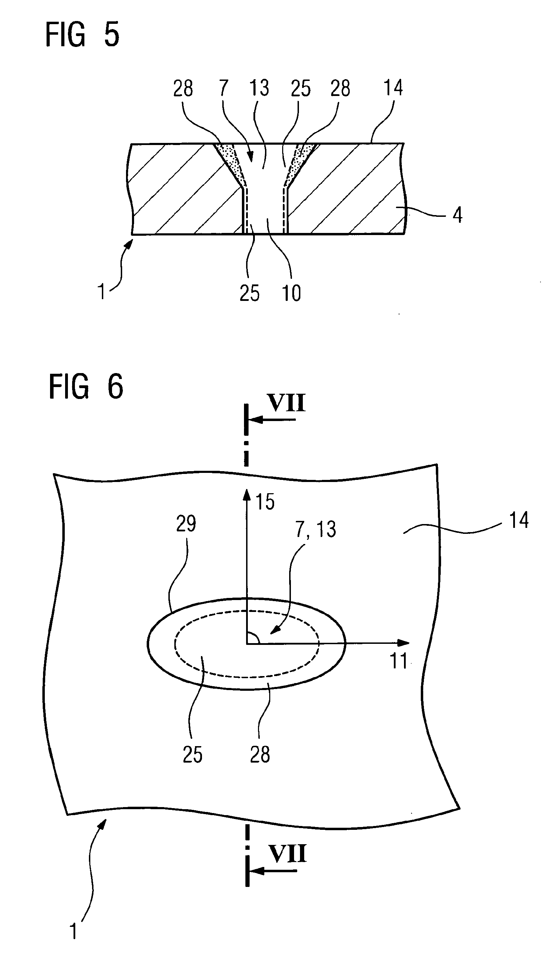

In einem der ersten Verfahrensschritte wird ein erster Teilbereich des Lochs 7 in dem Bauteil 1 erzeugt. Dies kann zumindest teilweise oder ganz dem Diffusor 13 entsprechen (Fig. 4, 7, 8).
Insbesondere, aber nicht notwendigerweise, wenn eine metallische Zwischenschicht oder das metallische Substrat 4 erreicht wird, werden Laserpulslängen größer als 50 ns, insbesondere größer als 100 ns und insbesondere bis 10 ms verwendet, um den restlichen (zweiten) Teilbereich 10 des Lochs 7 zu erzeugen, wie es in Figur 1 oder 2 dargestellt ist.
Die Laserpulslängen eines einzigen Lasers 19 können kontinuierlich verändert werden, beispielsweise vom Beginn bis zum Ende des Verfahrens. Der Beginn des Verfahrens liegt bei der Abtragung von Material an der äußeren Oberfläche 14 und das Ende des Verfahrens liegt in der Tiefe des Lochs 7.
Das Material wird beispielsweise schichtweise in einer Ebene 11 (Fig. 6) und in einer Axialrichtung 15 abgetragen.
Bei den Verfahrensschritten mit den kürzeren Pulslängen wird der Laserstrahl über die Oberfläche des Bauteils verfahren.

Das Verfahren kann angewendet werden bei neu hergestellten Bauteilen 1, die zum ersten Mal abgegossen wurden.

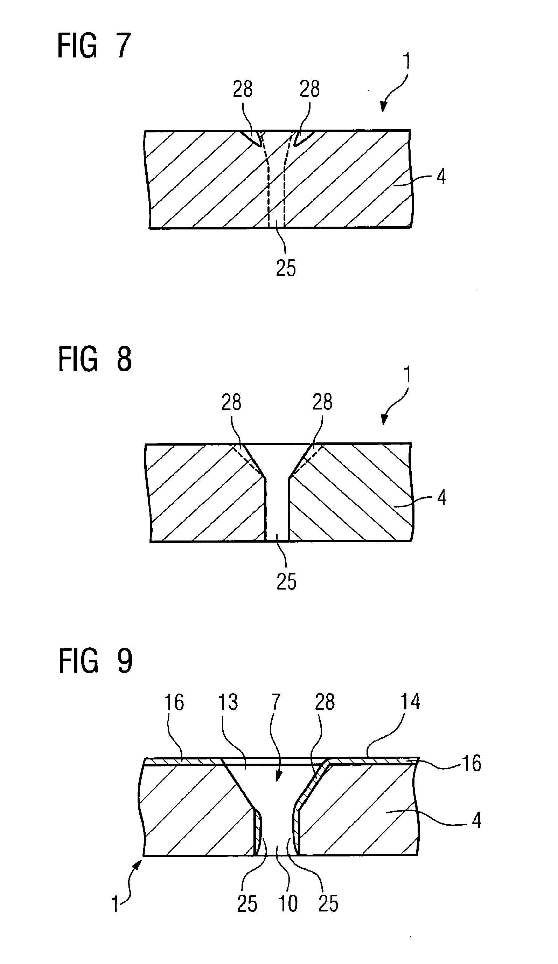

Ebenso kann das Verfahren verwendet werden bei wieder aufzuarbeitenden Bauteilen 1.
Wiederaufarbeitung (Refurbishment) bedeutet, dass Bauteile 1, die im Einsatz waren, beispielsweise von Schichten getrennt werden und nach Reparatur wie z.B. Auffüllen von Rissen und Entfernung von Oxidations- und Korrosionsprodukten wieder neu beschichtet werden.
Hier werden beispielsweise Verunreinigungen oder Beschichtungsmaterial, das erneut aufgebracht wurde (Fig. 7) und in die Löcher 7 gelangte, mit einem Laser 19, 19' entfernt.

Bei dem Verfahren können zumindest zwei oder mehr Laser 19, 19' verwendet werden, die beispielsweise nacheinander eingesetzt werden. Die verschiedenen Laser 19, 19' weisen verschiedene Bereiche hinsichtlich ihrer Laserpulslängen auf. So kann z.B. ein erster Laser 19 Laserpulslängen kleiner 100 ns, insbesondere kleiner 50 ns erzeugen und ein zweiter Laser 19' Laserpulslängen größer 50 ns, insbesondere größer 100 ns erzeugen.
Zur Erzeugung eines Lochs 7 wird zuerst der erste Laser 19 eingesetzt. Für die weitere Bearbeitung wird dann der zweite Laser 19' verwendet.

Figur 5 zeigt einen Querschnitt durch ein Loch 7.
Auch hier erfolgt zuerst eine Grobbearbeitung mit Laserpulslängen größer als 50 ns, insbesondere größer 100 ns und eine Feinbearbeitung mit Laserpulslängen kleiner 100 ns, insbesondere kleiner 50 ns.
Der untere Teilbereich 10 des Lochs 7 wird vollständig und der Bereich des Diffusors 13 wird fast vollständig mit einem Laser, der Laserpulslängen größer als 50 ns, insbesondere größer 100 ns aufweist, bearbeitet.
Zur Fertigstellung des Lochs 7 bzw. des Diffusors 13 muss nur noch ein dünner Oberbereich 28 im Bereich des Diffusors 13 mittels eines Lasers 19, 19', der Laserpulslängen kleiner 100 ns, insbesondere kleiner 50 ns erzeugen kann, bearbeitet werden.

Figur 6 zeigt eine Draufsicht auf ein Loch 7 des Bauteils 1. Die verschiedenen Laser 19, 19' bzw. die verschiedenen Laserpulslängen dieser Laser 19, 19' werden in verschiedenen Verfahrensschritten eingesetzt.
Zuerst erfolgt beispielsweise eine Grobbearbeitung mit großen Laserpulslängen (> 50 ns, insbesondere >100 ns). Dadurch wird der größte Teil des Lochs 7 erzeugt. Dieser innere Bereich ist mit dem Bezugszeichen 25 gekennzeichnet. Nur noch ein äußerer Oberbereich 28 des Lochs 7 bzw. des Diffusors 13 muss entfernt werden, um die Endmaße des Lochs 7 zu erreichen (Fig. 8, der äußere Oberbereich 28 ist gestrichelt angedeutet). Erst wenn der äußere Oberbereich 28 mittels eines Lasers 19, 19' mit sehr kurzen Laserpulslängen (< 100 ns, insbesondere < 50 ns) bearbeitet worden ist, ist das Loch 7 bzw. der Diffusor 13 fertiggestellt.
Die Kontur 29 des Diffusors 13 wird also mit sehr kurzen Laserpulslängen hergestellt, d.h. wodurch der äußere Oberbereich 28 abgetragen wird, und ist somit frei von Rissen und Aufschmelzungen.
Das Material wird beispielsweise in einer Ebene 11 (senkrecht zur Axialrichtung 15) abgetragen.

Eine Alternative bei der Herstellung des Lochs 7 besteht darin, zuerst den äußeren Oberbereich 28 mit kurzen Laserpulslängen (< 100 ns) bis zu einer Tiefe in Axialrichtung 15, die einer Ausdehnung des Diffusors 13 des Lochs 7 in dieser Richtung 15 teilweise oder ganz entspricht, zu erzeugen (Fig. 7, der innere Bereich 25 ist gestrichelt angedeutet). Somit werden nahezu keine Aufschmelzungen im Bereich der Trennfläche des Diffusors 13 erzeugt und es bilden sich dort keine Risse aus und exakte Geometrien können so erzeugt werden. Dann erst wird der innere Bereich 25 mit größeren Laserpulslängen (> 50 ns, insbesondere > 100 ns) abgetragen.
Bei den Verfahrensschritten mit den kürzeren Pulslängen wird der Laserstrahl über die Oberfläche des Bauteils verfahren.

Figur 9 zeigt die Nachbearbeitung (Refurbishment) eines Lochs 7, wobei bei einer Beschichtung des Substrats 4 mit dem Material der Schicht 16 Material in das bereits vorhandene Loch 7 eingedrungen ist.
Beispielsweise können die tiefer liegenden Bereiche im Bereich 10 des Lochs 7 mit einem Laser bearbeitet werden, der Laserpulslängen größer 50ns, insbesondere größer 100 ns aufweist. Diese Bereiche sind mit 25 gekennzeichnet.
Der kritischere Oberbereich 28 beispielsweise im Bereich des Diffusors 13, auf dem Verschmutzungen vorhanden sind, wird mit einem Laser 19' bearbeitet, der Laserpulslängen kleiner 100 ns, insbesondere kleiner 50 ns aufweist.
Bei den Verfahrensschritten mit den kürzeren Pulslängen wird der Laserstrahl über die Oberfläche des Bauteils verfahren.

Figur 10 zeigt beispielhaft eine erfindungsgemäße Vorrichtung 40, um das erfindungsgemäße Verfahren durchzuführen.
Die Vorrichtung 40 besteht beispielsweise aus zumindest einer Optik 35, hier einer Optik 35, insbesondere einer Linse, die einen Laserstrahl 22 auf das Substrat 4 lenkt, um das Durchgangsloch 10 zu erzeugen.
Es werden zumindest zwei Laser 19, 19' verwendet. Die Laserstrahlen 22', 22'' können über Spiegel 31, 33 zur Optik 35 hingeführt werden.

Die Spiegel 31, 33 sind verschieb- oder drehbar, so dass jeweils nur ein Laser 19, 19' seine Laserstrahlen 22' oder 22'' über die Spiegel 31 oder 33 und die Linse 35 auf das Bauteil 1 sendet.
Auch können die Laserstrahlen 22' oder 22'' über eine Optik oder zwei, ggf. mehrere, Optiken auf das Bauteil gleichzeitig gelenkt werden, wenn verschiedene Bereiche in einer Ebene abgetragen werden. So können z.B. der äußere Bereich 28 mit kurzen Laserpulslängen und der innere Bereich 25 mit größeren Laserpulslängen gleichzeitig hergestellt werden.
Die Laser 19, 19' können Wellenlängen von 1064 nm oder 532 nm aufweisen. Die Laser 19, 19' können verschiedene Wellenlängen aufweisen.
Ebenso weist beispielsweise der Laser 19 Pulslängen von 0,05 - 5 ms auf; hingegen weist der Laser 19' Pulslängen von 50 - 500 ns auf.
Somit kann durch Verschieben der Spiegel 31, 33 jeweils der Laser 19, 19' mit seinen entsprechenden Laserpulslängen über die Optik 35 auf das Bauteil 1 eingekoppelt werden, die notwendig sind, um beispielsweise den äußeren Oberbereich 28 oder den Innenbereich 25 herzustellen.
Sowohl die Spiegel 31, 33, die Optik oder das Substrat 4 können so verschoben werden, dass Material flächig vom Substrat 4 gemäss den Figuren 3 bis 9 abgetragen wird.
Wird beispielsweise zuerst der äußere Oberbereich 28 gemäß Figur 6 hergestellt, so wird der Laser mit den kleinen Laserpulslängen 19' eingekoppelt. Wird dann der innere Bereich 25 hergestellt, so wird durch Bewegung des Spiegels 33 der Laser 19' ausgekoppelt und durch Bewegung des Spiegels 31 der Laser 19 mit seinen größeren Laserpulslängen 10 eingekoppelt.

Figur 11 zeigt in perspektivischer Ansicht eine Schaufel 120, 130, die sich entlang einer Längsachse 121 erstreckt, in die beispielsweise Filmkühllöcher, beispielsweise mit einem Diffusor 13, einzubringen sind.
Die Schaufel 120, 130 weist entlang der Längsachse 121 aufeinander folgend einen Befestigungsbereich 400, eine daran angrenzende Schaufelplattform 403 sowie einen Schaufelblattbereich 406 auf. Im Befestigungsbereich 400 ist ein Schaufelfuß 183 gebildet, der zur Befestigung der Laufschaufeln 120, 130 an der Welle dient. Der Schaufelfuß 183 ist als Hammerkopf ausgestaltet. Andere Ausgestaltungen, beispielsweise als Tannenbaum- oder Schwalbenschwanzfuß sind möglich. Bei herkömmlichen Schaufeln 120, 130 werden in allen Bereichen 400, 403, 406 der Laufschaufel 120, 130 massive metallische Werkstoffe verwendet. Die Laufschaufel 120, 130 kann hierbei durch ein Gussverfahren, durch ein Schmiedeverfahren, durch ein Fräsverfahren oder Kombinationen daraus gefertigt sein.

Die Figur 12 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.
Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie sind einkristallin (SX-Struktur) oder weisen nur längsgerichtete Körner auf (DS-Struktur).
Als Material werden eisen-, nickel- oder kobaltbasierte Superlegierungen verwendet.
Ebenso können die Schaufeln 120, 130 Beschichtungen gegen Korrosion (MCrAlX; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise Zr02, Y2O4-ZrO2, d.h. sie ist nicht teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

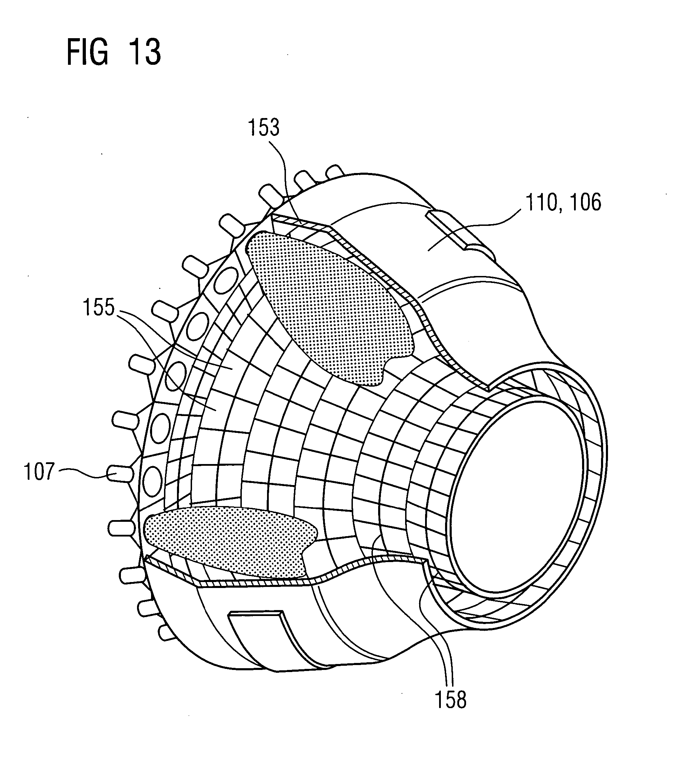

Die Figur 13 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.
Auch die Hitzeschildelemente 155 können Löcher 7 beispielsweise auch mit einem Diffusor 13 aufweisen, um das Hitzeschildelement 155 zu kühlen oder um brennbares Gas ausströmen zu lassen.

Die Materialien der Brennkammerwand und deren Beschichtungen können ähnlich der Turbinenschaufeln sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zur Herstellung eines Lochs (7) in einem Bauteil (1, 120, 130, 155) mittels gepulster Laserstrahlen (22),
**dadurch gekennzeichnet, dass**
das Verfahren in einer Vielzahl von Verfahrensschritten ausgeführt wird,
dass in einem der ersten Verfahrensschritte kleinere Laserpulslängen verwendet werden als in einem der letzten Verfahrensschritte und
dass bei den Verfahrensschritten mit den kürzeren Pulslängen der Laserstrahl über die Oberfläche des Bauteils verfahren wird.

2. Verfahren nach Anspruch 1,
**dadurch gekennzeichnet, dass**
die Laserpulslänge während des Fortschreitens der Lochbildung von einer äußeren Oberfläche (14) des Bauteils (1) hin bis zur Tiefe des Lochs (7) kontinuierlich vergrößert wird.

3. Verfahren nach Anspruch 1 oder 2,
**dadurch gekennzeichnet, dass**
in einem ersten Verfahrensschritt Laserpulslängen kleiner 100 ns, insbesondere kleiner 50 ns, und
in einem der letzten Verfahrensschritte Laserpulslängen größer gleich 50 ns, insbesondere größer gleich 100 ns, und kleiner 10 ms verwendet werden.

4. Verfahren nach Anspruch 1,
**dadurch gekennzeichnet, dass**
mit dem Verfahren ein Bauteil (1) bearbeitet wird, wobei das Bauteil (1) ein Schichtsystem darstellt.

5. Verfahren nach Anspruch 4,
**dadurch gekennzeichnet, dass**
mit dem Verfahren ein Schichtsystem (1) bearbeitet wird, das aus einem metallischen Substrat (4) und zumindest einer keramischen Schicht (16) besteht.

6. Verfahren nach Anspruch 4 oder 5,
**dadurch gekennzeichnet, dass**
das Schichtsystem (1) aus einem Substrat (4) und einer metallischen Schicht (16) besteht,
die insbesondere eine Zusammensetzung des Typs MCrAlX aufweist,
wobei M für zumindest ein Element der Gruppe Eisen, Kobalt oder Nickel steht,
sowie X für Yttrium und/oder zumindest ein Element der Seltenen Erden steht.

7. Verfahren nach Anspruch 5 oder 6,
**dadurch gekennzeichnet, dass**
das Schichtsystem (1) aus einem Substrat (4) und einer Schicht (16) besteht,
die eine metallische Zwischenschicht und eine äußere keramische Schicht aufweist.

8. Verfahren nach Anspruch 5 oder 7,
**dadurch gekennzeichnet, dass**
die keramische Schicht (16) eine Wärmedämmschicht ist.

9. Verfahren nach Anspruch 5, 6, 7 oder 8,
**dadurch gekennzeichnet, dass**
das Substrat (4) eine nickel-, kobalt- oder eisenbasierte Superlegierung ist.

10. Verfahren nach Anspruch 1,
**dadurch gekennzeichnet, dass**
mit dem Verfahren ein Bauteil (1) bearbeitet wird,
das eine Turbinenschaufel (120, 130),
eine Brennkammerauskleidung (155) oder
ein anderes Bauteil
einer Gas- (100) oder Dampfturbine ist.

11. Verfahren nach Anspruch 1 oder 10,
**dadurch gekennzeichnet, dass**
das Verfahren bei der Neuherstellung eines Bauteils (1, 120, 130, 155) verwendet wird.

12. Verfahren nach Anspruch 1 oder 10,
**dadurch gekennzeichnet, dass**
das Verfahren bei einem wiederaufzuarbeitenden Bauteil (1, 120, 130, 155) verwendet wird.

13. Verfahren nach Anspruch 1,
**dadurch gekennzeichnet, dass** zumindest zwei, insbesondere mehrere Laser (19, 19'), die verschiedene Bereiche von Laserpulslängen erzeugen können, verwendet werden.

14. Verfahren nach Anspruch 1,
**dadurch gekennzeichnet, dass** zuerst ein äußerer Oberbereich (13) des Lochs (7) mit kleinen Laserpulslängen erzeugt wird,
und dann ein zweiter Teilbereich (10) des Lochs (7) mit größeren Laserpulslängen erzeugt wird.

15. Verfahren nach Anspruch 1,
**dadurch gekennzeichnet, dass** in einem ersten Verfahrensschritt ein äußerer Oberbereich (28),
dann in einem der letzten Verfahrensschritte ein innerer Bereich (25) des Lochs (7) erzeugt wird.

16. Vorrichtung (40) zur Bearbeitung eines Bauteils (1), insbesondere nach einem oder mehreren der vorherigen Ansprüche,
bestehend aus zumindest zwei Lasern (19, 19'), die verschiedene Laserpulslängen erzeugen.

17. Vorrichtung nach Anspruch 16,
**dadurch gekennzeichnet, dass**
die Vorrichtung (40) zumindest einen Spiegel (31, 33) aufweist,
der verwendet wird, um einen Laserstrahl (22) auf das zu bearbeitende Bauteil (1) zu lenken.

18. Vorrichtung nach Anspruch 16 oder 17,
**dadurch gekennzeichnet, dass**
die Vorrichtung zumindest eine Optik (35), insbesondere eine Optik (35), aufweist,
die die Laserstrahlen (22', 22'') der Laser (19, 19') auf das Bauteil (1) steuert.

19. Vorrichtung nach Anspruch 16 oder 17,
**dadurch gekennzeichnet, dass**
die Vorrichtung zumindest eine Optik (35) aufweist, so dass die Laserstrahlen (22', 22'') der Laser (19, 19') gleichzeitig auf das Bauteil (1) gelenkt werden.
